# EUROPEAN PATENT SPECIFICATION

(11) **EP 0 434 211 B1**
(45) Date of publication and mention of the grant of the patent: **19.04.1995**
(21) Application number: 90312511.0
(22) Date of filing: 16.11.1990
(51) Int. Cl.: F16J 13/24

(54) **Safety devices for pressure chambers**
Sicherheitsvorrichtung für Druckkammer
Dispositif de sécurité pour chambre de pression

(30) Priority: 22.11.1989 GB 8926373
(43) Date of publication of application: 26.06.1991
(73) Proprietor: BARTON FIRTOP ENGINEERING CO LIMITED, Bromsgrove, Worcestershire B60 4LT (GB)
(72) Inventor: Goddard, Simon Paul, Bromsgrove, Worcestershire, B61 0EJ (GB)
(74) Representative: Spall, Christopher John

(56) References cited:
- EP-A- 0 272 123
- DE-C- 3 341 675
- DE-U- 8 600 091

## Description

This invention relates to safety devices for fluid pressure chambers, in particular to chambers sealed by removable covers.

Liquid or gas systems operating under pressure often include chambers arranged to allow access to parts of the system, for example to filters which trap foreign matter in the system, and which need to be emptied periodically. It is important to ensure that the pressure in the chamber is relieved before its cover is removed, as any residual pressure can blow out the contents of the chamber, which can be dangerous.

EP-A-0 272 123 which forms the preamble of claim 1 shows a pressure chamber with a closure retained by a pivotally mounted retaining cover, which has segments movable radially into a groove in the chamber to lock the closure and hold it against pressure. The segments operate by pinions rotated by an operating handle which interlocks with a vent plug, so that the handle cannot be operated to release the segments unless the vent plug is at least partially unscrewed, releasing the pressure. Thus, any pressure in the chamber is released by the vent plug before the closure is removed.

De-U-8600091 shows a chamber closed by a disc, retained by a mechanically complicated arrangement, whose operation is not wholly clear. The disc is carried by a ring having a bayonet connection to the chamber, and the ring is mounted on a swinging arm by a spindle. One edge portion of the disc has a locking connection to the ring by a toggle arrangement, which can be released by operation of a nut mounted on the spindle. The toggle and/or the spindle hold the disc against pressure. The nut is locked in position by a beam, which is in turn held by a vent member. Thus, the disc cannot be released by the toggle arrangement unless the nut is freed by opening of the vent member to relieve the pressure in the chamber.

According to the present invention, a fluid pressure chamber provided in a housing is sealed by a removable cover retained on the housing by releasable first retaining means pivotally connected to the housing movable between positions preventing and allowing removal of the cover, a safety device being provided in the chamber, the safety device comprising a vent member for a vent aperture provided for the chamber, the vent member being movable between a closed position in which the aperture is sealed, and an open position in which the aperture is open, and being adapted to co-operate with the first retaining means, the arrangement being such that in its closed position the vent member prevents movement of the first retaining means into the position allowing removal of the cover, but in its open position such movement of the first retaining means is permitted, the first retaining means including force-applying means for the cover to maintain its sealing engagement under pressure, characterised in that the vent member in its closed position acts on the force-applying means, and the cover has extra retaining means in the form of lugs engageable under projections in the housing.

This arrangement means that the first retaining means cannot be released, and thus the cover removed, until any pressure in the chamber has been relieved by the operation of the vent member, thus ensuring safe removal of the cover. The extra retaining means add to the safety of the arrangement.

Conveniently, the vent aperture is provided in the cover itself.

The vent member may include a venting groove allowing pressure to be released slowly and audibly from the chamber. The safety device may also include means limiting movement of the vent member away from the aperture, to ensure that the vent member cannot be blown out if for any reason the pressure is not released slowly. Preferably the limiting means comprises a shoulder on the vent member co-operating with an abutment on the housing or the retaining means.

In a first preferred embodiment the first retaining means comprises an arm pivotally connected at one end to the housing and releasably connected to the housing at the other end. Advantageously the arm is releasably connected to the housing by a pin.

Where the first retaining means comprises a pivoted arm extending across the cover in the access-preventing position, and a screw-threaded member for applying the sealing force to the cover, the screw-threaded member is preferably provided with a locking member with which the vent member engages to prevent rotation of the screw-threaded member, as well as movement of the pivotal arm.

In a second embodiment the pressure chamber is a filter chamber. The chamber may have any or all of the aforementioned safety features.

Some embodiments of the present invention are illustrated, by way of example only, in the accompanying drawings, in which:-
Figure 1 is a plan view of a fluid pressure chamber including a safety device;
Figure 2 is a section substantially along the line II-II of Figure 1;
Figure 3 is a section along the line III-III of Figure 1; and
Figure 4 is a scrap section showing a modification.

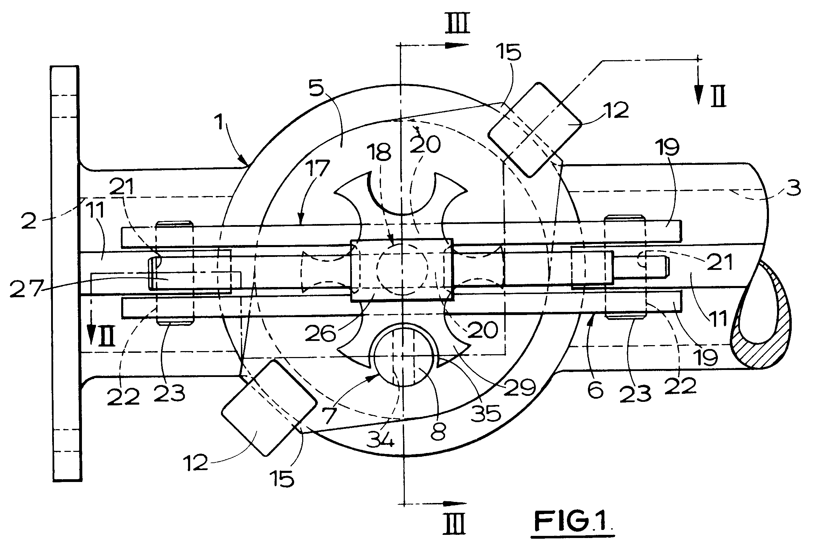

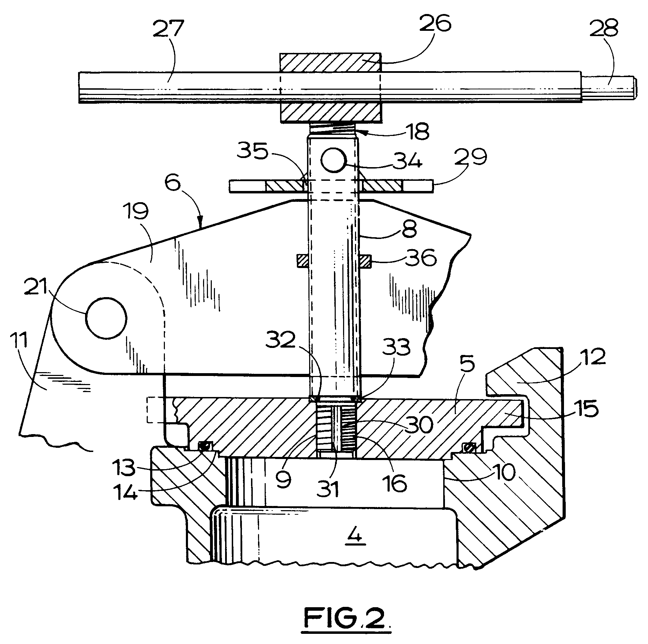

Figures 1 to 3 show part of a filter unit for use in a pressurised liquid or gas system. The filter unit comprises a housing 1 having inlet and outlet ports 2, 3 respectively for connection into a pipeline (not shown), the ports 2, 3 being connected by a chamber 4 in which a filter basket (not shown) is located. The chamber 4 is closed by a cover 5 retained on the housing 1 by first releasable retaining means 6, movable between open and closed positions respectively allowing and preventing access to the cover 5, and a safety device 7 is provided in the form of a vent member 8 adapted to close a vent aperture 9 of the chamber 4, and to co-operate with the retaining means 6 to prevent movement of the retaining means 6 into the position allowing access to the cover 5.

The housing 1 is of cast metal, having at the top an access aperture 10 for the chamber 4 adapted to be closed by the cover 5. Adjacent the aperture 10 the housing 1 has a pair of diametrically opposed upstanding lugs 11 to which the retaining means 6 is attached, and a pair of diametrically opposed projections 12, extending radially inwardly and circumferentially spaced from the lugs 11, to provide extra retention for the cover 5.

The cover 5 is also of cast metal and is provided with a seal 13 adapted to engage a sealing face 14 on the housing 1 surrounding the aperture 10. The cover 5 has a diametrically opposed pair of radially outwardly projecting lugs 15 adapted to engage under the projections 12 on the housing 1. The cover 5 is also provided with the vent aperture 9, which has an internal screw thread 16.

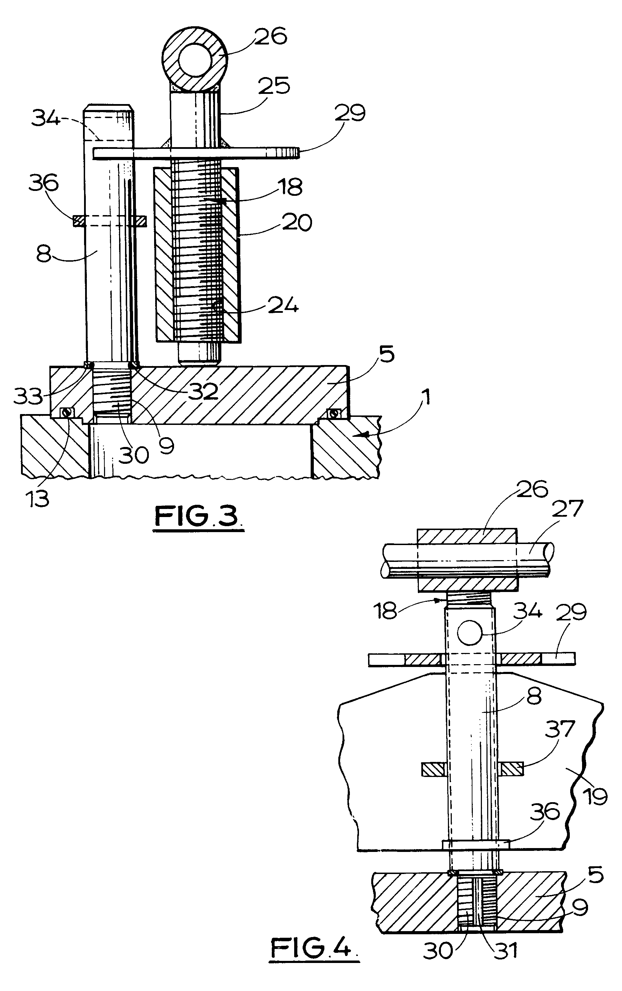

The retaining means 6 comprises a closure arm 17 in which works a screw-threaded member 18 for applying a sealing force to the cover 5. The arm 17 has a pair of parallel plates 19 connected by a central block 20. At each end of the arm 17 the plates are adapted to fit over a corresponding lug 11 on the housing, and the lugs 11 and plates 19 have aligned apertures 21, 22 respectively, pins 23 being passed through the apertures 21, 22 to connect the arm 17 to the lugs 11. At one end of the arm 17 the pin 23 is permanently located to provide a pivotal connection, while at the other end the pin 23 is releasable. This enables the arm 17 to swing between the open and closed positions. It will be noted that in the closed position the lower edge of the arm 17 is spaced from the cover 5. The screw-threaded member 18 works in a threaded through bore 24 (best seen in Figure 3) in the central block 20; the lowest end of the member 18 is able to engage the cover 5 to apply the sealing force. The upper end 25 of the member 18 is of plain cylindrical outline, and has a transverse cylindrical socket 26 adapted to receive an operating handle 27. The handle 27 is removable, and has a reduced diameter portion 28 at one end.

The safety device 7 comprises the vent member 8 and a locking member 29 attached to the member 18 of the retaining means 6. The vent member 8 is of stainless steel, and cylindrical outline, having at its lower end a screw-threaded portion 30 engaging in the vent aperture 9, and having a longitudinal vent groove 31. A bonded seal element 32, located and secured by a shoulder abutment 33 incorporated into the vent member 8 ensures that the vent aperture 9 is sealed when the vent member 8 is screwed into its closed position in the aperture 9. The upper end of the vent member 8 has a transverse bore 34, into which the reduced diameter portion 28 of the handle 27 can be inserted to rotate the member 8. The upper end of the vent member 8 is also adapted to engage with the locking member 29, which comprises a stainless steel plate welded to the upper end 25 of the member 18, and having six part-circular recesses 35 in which the vent member 8 can be received. With the vent member 8 in its closed position sealing the vent aperture 9, and received in a recess 35 in the member 29, it will be seen that rotation of the member 18 is prevented, as is movement of the arm 17. The vent member 8 has an annular shoulder 36 which is engageable with the locking member 29 in order to limit outward movement of the vent member 8.

In use, the filter unit is located in the pipeline, with the parts in the positions shown, that is, with the cover 5 closing the aperture 10 and the lugs 15 under the projections 12, the closure arm 17 in the closed position preventing access to the cover 5, and the screw member 18 applying the sealing force to the cover 5, and with the vent member 8 in its closed position, sealing the vent aperture 9, and locking the arm 17 and the member 18 against movement.

If access to the chamber 4 is required, for example to empty the filter basket, the handle 27 is removed from the socket 26, and the portion 28 is used to unscrew the vent member 8. Any pressure in the chamber 4 escapes slowly and audibly through the groove 31. When the pressure is released the vent member is unscrewed fully, and removed radially, to disengage it from the locking member 29. The handle 27 can then be re-inserted in the socket 26 to unscrew the member 18, releasing the sealing force on the cover 5, and then the pin 23 is released, allowing the arm 17 to be pivoted into the open position. The cover 5 is then rotated to disengage the lugs 15 from the projections 12, and removed, using the lugs 15 as handles. The unit is re-assembled by reversing these steps.

The safety device 7 ensures that any pressure in the chamber 4 is relieved before the cover 5 can be removed. Should the vent groove 31 be blocked, the pressure cannot then be released slowly, but will be released rapidly when the vent member 8 is fully disengaged. The rapid release of pressure will tend to blow the vent member 8 out, but as its movement is limited by the shoulder 36 engaging the locking member 29, any danger is minimised.

As a further safety feature, the handle 27 can be removed altogether from the assembly, ensuring that the unit cannot be opened by unauthorised operators.

Figure 4 shows a modification to the means limiting the outward movement of the vent member 8. In Figure 4 the shoulder 36 is provided adjacent the lower end of the vent member 8, and is adapted to engage with a radial projection 37 on the central block 20 of the arm 17. The remainder of the construction and operation of the embodiment of Figure 4 is the same as that of Figures 1 to 3, and corresponding reference numerals have been applied to corresponding parts.

## Claims

1. A fluid pressure chamber (4) provided in a housing (1) and sealed by a removable cover (5) retained on the housing by releasable first retaining means (6) pivotally connected to the housing and movable between positions preventing and allowing removal of the cover (5), a safety device (7) being provided in the chamber (4), the safety device (7) comprising a vent member (8) for a vent aperture (9) provided for a chamber (4), the vent member (8) being movable between a closed position in which the aperture (9) is sealed, and an open position in which the aperture is open, and being adapted to co-operate with the first retaining means (6), the arrangement being such that in its closed position the vent member (8) prevents movement of the first retaining means (6) into the position allowing removal of the cover (5), but in its open position such movement of the first retaining means (6) is permitted, the first retaining means (6) including force-applying means (18) for the cover (5) to maintain its sealing engagement under pressure, characterised in that the vent member (8) in its closed position acts on the force-applying means (18), and the cover (5) has extra retaining means in the form of lugs (15) engageable under projections (12) in the housing (1).

2. A pressure chamber according to claim 1, characterised in that the vent aperture (9) is provided in the cover (5) itself.

3. A pressure chamber according to claim 1 or claim 2, characterised in that the vent member (8) includes a venting groove (31) allowing pressure to be released slowly and audibly from the chamber.

4. A pressure chamber according to any preceding claim, characterised in that the safety device (7) includes means (36;37) limiting movement of the vent member (8) away from the aperture (9), to ensure that the vent member cannot be blown out if for any reason the pressure is not released slowly.

5. A pressure chamber according to claim 4, characterised in that the limiting means comprises a shoulder (36:37) on the vent member co-operating with an abutment on the housing (1) or the retaining means (6).

6. A pressure chamber according to any preceding claim, characterised in that the first retaining means (6) comprises an arm (19) pivotally connected at one end to the housing (1) and at a second end releasably connected to the housing.

7. A pressure chamber according to claim 6, characterised in that the second end of the arm (17) is releasably connected to the housing (1) by a pin (23).

8. A pressure chamber according to any preceding claim, characterised in that the first retaining means (6) comprises a pivoted arm (17) extending across the cover (5) in the access-preventing position, and a screw-threaded member (18) for applying the sealing force to the cover (5), the screw-threaded member (18) being provided with a locking member (29) with which the vent member (8) engages to prevent rotation of the screw-threaded member, as well as movement of the pivotal arm (19).

9. A pressure chamber according to any preceding claim characterised in that the fluid pressure chamber is a filter chamber.

## Patentansprüche

1. Fluid-Druckkammer (4), die in einem Gehäuse (1) vorgesehen ist und von einer entfernbaren Abdeckung (5), die auf dem Gehäuse von einer ersten Halteeinrichtung (6) gehalten wird, welche schwenkbar mit dem Gehäuse verbunden und zwischen Positionen bewegbar ist, die das Entfernen der Abdeckung (5) verhindern und erlauben, abgedichtet ist, wobei eine Sicherheitsvorrichtung (7) in der Kammer (4) vorgesehen ist, wobei die Sicherheitsvorrichtung (7) ein Entlüftungselement (8) für eine Entlüftungsöffnung (9), die für eine Kammer (4) vorgesehen ist, aufweist, wobei das Entlüftungselement (8) zwischen einer geschlossenen Position, in der die Öffnung (9) abgedichtet ist, und einer offenen Position, in der die Öffnung offen ist, bewegbar ist und so ausgelegt ist, daß sie mit der ersten Halteeinrichtung (6) zusammenwirkt, wobei die Anordnung derart ist, daß in seiner geschlossenen Position das Entlüftungselement (8) die Bewegung der ersten Halteeinrichtung (6) in die Position, die das Entfernen der Abdeckung (5) ermöglicht, verhindert, wobei jedoch in seiner offenen Position eine solche Bewegung der ersten Halteeinrichtung (6) erlaubt ist, wobei die erste Halteeinrichtung (6) eine kraftbeaufschlagende Einrichtung (18) für die Abdeckung (5) umfaßt, um ihren Dichteingriff unter Druck beizubehalten, dadurch gekennzeichnet, daß das Entlüftungselement (8) in seiner geschlossenen Position auf die kraftbeaufschlagende Einrichtung (18) wirkt und die Abdeckung (5) eine zusätzliche Halteeinrichtung in der Form von Ansätzen (15) hat, die unter Vorsprünge (12) in dem Gehäuse (1) greifen.

2. Druckkammer nach Anspruch 1, dadurch gekennzeichnet, daß die Entlüftungsöffnung (9) in der Abdeckung (5) selbst vorgesehen ist.

3. Druckkammer nach Anspruch 1 oder 2, dadurch gekennzeichnet, daß das Entlüftungselement (8) eine Entlüftungsnut (31) umfaßt, die es erlaubt, daß der Druck langsam und hörbar aus der Kammer ausgelassen wird.

4. Druckkammer nach einem der vorangehenden Ansprüche, dadurch gekennzeichnet, daß die Sicherheitsvorrichtung (7) eine Einrichtung (36; 37) umfaßt, die die Bewegung des Entlüftungselementes (8) von der Öffnung (9) begrenzt, um sicherzustellen, daß das Entlüftungselement nicht herausgeblasen werden kann, wenn aus irgendeinem Grund dar Druck nicht langsam abgebaut wird.

5. Druckkammer nach Anspruch 4, dadurch gekennzeichnet, daß die Begrenzungseinrichtung eine Schulter (36; 37) auf dem Entlüftungselement aufweist, die mit einem Anschlag auf dem Gehäuse (1) oder der Halteeinrichtung (6) zusammenwirkt.

6. Druckkammer nach einem der vorangehenden Ansprüche, dadurch gekennzeichnet, daß die erste Halteeinrichtung (6) einen Arm (19) aufweist, der schwenkbar an einem Ende mit dem Gehäuse (1) verbunden und an einem zweiten Ende freigebbar mit dem Gehäuse verbunden ist.

7. Druckkammer nach Anspruch 6, dadurch gekennzeichnet, daß das zweite Ende des Arms (19) freigebbar über einen Stift (23) mit dem Gehäuse (1) verbunden ist.

8. Druckkammer nach einem der vorangehenden Ansprüche, dadurch gekennzeichnet, daß die erste Halteeinrichtung (6) einen Schwenkarm (19) aufweist, der sich über die Abdeckung (5) in dar den Zugang verhindernden Position erstreckt, und ein mit Schraubgewinde versehenes Element (18) zum Aufgeben dar dichtenden Kraft auf die Abdeckung (5), wobei das mit Schraubgewinde versehene Element (18) mit einem Verriegelungselement (29) versehen ist, mit dem das Entlüftungselement (8) im Eingriff ist, um die Drehung des mit Schraubgewinde Versehenen Elementes zu verhindern, ebenso wie die Bewegung des Schwenkarmes (19).

9. Druckkammer nach einem der vorangehenden Ansprüche, dadurch gekennzeichnet, daß die Fluid-Druckkammer eins Filterkammer ist.

## Revendications

1. Chambre (4) à pression de fluide prévue dans un boîtier (1) et fermée de façon étanche par un couvercle amovible (5) retenu sur le boîtier par des premiers moyens de retenue libérables (6) raccordés de façon pivotante au boîtier et mobiles entre des positions empêchant et permettant l'enlèvement du couvercle (5), un dispositif de sécurité (7) étant prévu dans la chambre (4), le dispositif de sécurité (7) comprenant un élément d'évent (8) pour une ouverture d'évent (9) prévue pour une chambre (4), l'élément d'évent (8) étant mobile entre une position fermée dans laquelle l'ouverture (9) est obturée de façon étanche et une position ouverte dans laquelle l'ouverture est dégagée, et étant propre à coopérer avec les premiers moyens de retenue (6), l'agencement étant tel que dans sa position fermée l'élément d'évent (8) empêche le mouvement des premiers moyens de retenue (6) jusqu'à la position permettant l'enlèvement du couvercle (5), mais que dans sa position ouverte un tel mouvement des premiers moyens de retenue (6) est permis, les premiers moyens de retenue (6) comprenant des moyens d'application de force (18) pour le couvercle (5) pour maintenir son contact étanche sous pression, caractérisée en ce que l'élément d'évent (8) dans sa position fermée agit sur les moyens d'application de force (18), et le couvercle (5) présente des moyens de retenue supplémentaires sous forme d'oreilles (15) pouvant pénétrer sous des saillies (12) du boîtier (1).

2. Chambre à pression selon la revendication 1, caractérisée en ce que l'ouverture d'évent (9) est prévue dans le couvercle lui-même.

3. Chambre à pression selon l'une des revendications 1 et 2, caractérisée en ce que l'élément d'évent (8) comporte une gorge d'évent (31) permettant un relâchement de la pression lent et audible de la chambre.

4. Chambre à pression selon l'une quelconque des revendications précédentes, caractérisée en ce que le dispositif de sécurité (7) comprend des moyens (36;37) limitant le mouvement de l'élément d'évent (8) à l'éloignement de l'ouverture (9), pour assurer que l'élément d'évent ne puisse être éjecté si pour une raison quelconque la pression n'est pas relâchée lentement.

5. Chambre à pression selon la revendication 4, caractérisée en ce que les moyens de limitation comprennent un épaulement (36:37) sur l'élément d'évent coopérant avec une butée sur le boîtier (1) ou sur les moyens de retenue (6).

6. Chambre à pression selon l'une quelconque des revendications précédentes, caractérisée en ce que les premiers moyens de retenue (6) comprennent un bras (19) raccordé de façon pivotante à une extrémité au boîtier (1) et à une seconde extrémité raccordé de façon détachable au boîtier.

7. Chambre à pression selon la revendication 6, caractérisée en ce que la seconde extrémité du bras (19) est raccordée de façon détachable au boîtier (1) par une cheville (23).

8. Chambre à pression selon l'une quelconque des revendications précédentes, caractérisée en ce que les premiers moyens de retenue (6) comprennent un arbre pivotant (19) s'étendant en travers du couvercle (5) dans la position interdisant l'accès, et un élément fileté (18) pour appliquer la force de fermeture étanche au couvercle (5), l'élément fileté (18) étant muni d'un élément de verrouillage (29) avec lequel l'élément d'évent (8) vient en prise pour empêcher la rotation de l'élément fileté, ainsi que le mouvement du bras pivotant (19).

9. Chambre à pression selon l'une quelconque des revendications précédentes, caractérisée en ce que la chambre à pression de fluide est une chambre de filtre.
